Europäisches Patentamt

European Patent Office

Office européen des brevets

(11) Numéro de publication: **0 259 236**
**A1**

## (12) DEMANDE DE BREVET EUROPEEN

(21) Numéro de dépôt: **87420228.6**

(22) Date de dépôt: **27.08.87**

(51) Int. Cl.⁴: **F 16 L 37/00**

(30) Priorité: **01.09.86 FR 8612397**

(43) Date de publication de la demande:
**09.03.88 Bulletin 88/10**

(84) Etats contractants désignés:
**CH DE ES FR GB IT LI SE**

(71) Demandeur: **S.A. DES ETABLISSEMENTS STAUBLI (France)**
**B.P. 20 183 Rue des Usines**
**F-74210 Faverges (FR)**

(72) Inventeur: **Palau, Joseph**
**Les Perris**
**F-74410 Duingt (FR)**

(74) Mandataire: **Monnier, Guy et al**
**Cabinet Monnier 150 Cours Lafayette B.P. 3058**
**F-69393 Lyon Cédex 03 (FR)**

(54) **Raccord double pour la jonction amovible de canalisations jumelées.**

(57)    Les deux embouts (11) de la pièce mâle (10) s'engagent dans des alésages parallèles (1a, 1b) de la pièce femelle (1), et l'un d'entre eux coopère avec un mécanisme de verrou (8-9) qui assure l'assemblage amovible des deux pièces. Le brevet décrit une variante dans laquelle le verrou est disposé entre les deux alésages afin de coopérer avec les deux embouts.

Fig. 2

EP 0 259 236 A1

## Description

La présente invention a trait aux installations d'alimentation comprenant deux canalisations parallèles pour l'amenée de deux fluides différents à un même appareillage susceptible d'être instantanément connecté et déconnecté.

A titre d'exemple, on citera le cas des chalumeaux oxy-acétyléniques de soudage et de coupage, auxquels on désire conserver un caractère amovible et qui sont de ce fait reliés par des raccords rapides à des canalisations d'alimentation jumelées.

En vue de simplifier les manoeuvres de connexion et de déconnection, l'invention a pour objet un raccord double essentiellement caractérisé en ce qu'il comprend d'une part une pièce mâle pourvue de deux embouts orientés parallèlement l'un à l'autre, et d'autre part une pièce femelle qui est creusée de deux alésages correspondants aptes à recevoir de manière étanche les embouts précités et qui porte un mécanisme de verrouillage unique propre à assurer l'assemblage démontable des deux pièces mâle et femelle.

Le dessin annexé, donné à titre d'exemple, permettra de mieux comprendre l'invention, les caractéristiques qu'elle présente et les avantages qu'elle est susceptible de procurer :

Fig. 1 est une coupe axiale d'un raccord double suivant l'invention, les deux pièces constitutives étant représentées préalablement à leur emmanchement.

Fig. 2 reproduit fig. 1 après emmanchement et assemblage des deux pièces.

Fig. 3 et 4 sont des coupes transversales, respectivement suivant les plans indiqués en III-III (fig. 2) et IV-IV (fig. 1).

Fig. 5 est une coupe transversale analogue à celle de fig. 3, mais correspondant à une variante de réalisation.

Fig. 6 est une vue de côté illustrant l'alimentation d'un chalumeau de soudage à l'aide d'un raccord double établi conformément à l'invention.

Fig. 7 est une vue partielle analogue, correspondant à un autre mode de mise en oeuvre de l'invention.

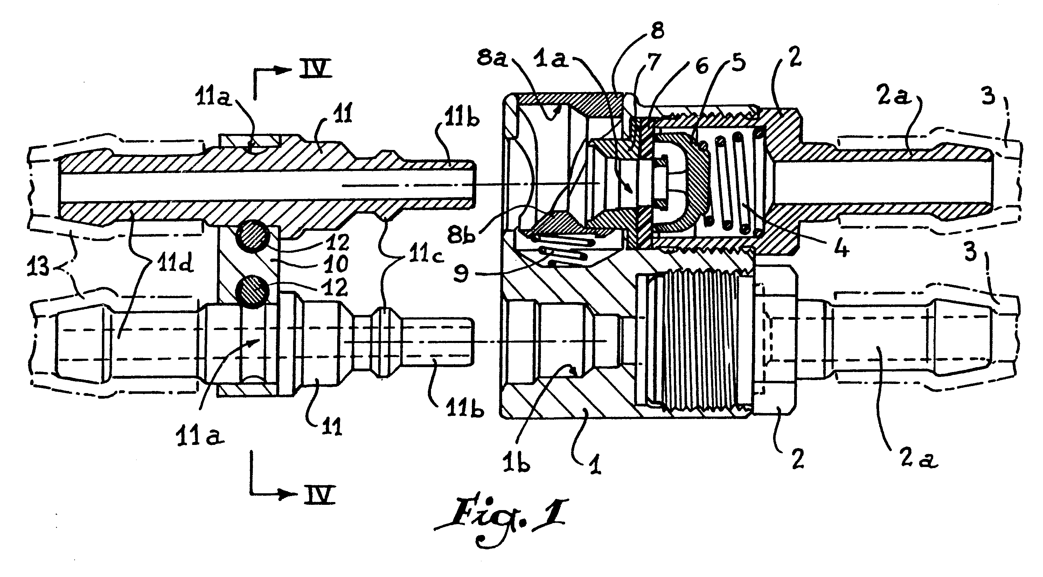

Le raccord représenté en fig. 1 à 4 comprend en premier lieu une pièce femelle 1 de forme massive, qui est creusée de deux alésages débouchants 1a et 1b orientés parallèlement l'un à l'autre suivant l'axe principal de ladite pièce 1 ; chaque alésage 1a et 1b se prolonge à l'intérieur de la partie creuse d'une douille 2 vissée dans le débouché de l'alésage considéré et pourvue d'une queue axiale 2a profilée pour permettre l'emmanchement et la fixation de l'extrémité d'une canalisation flexible telle que 3. Contre un épaulement annulaire de chaque douille 2 prend appui un ressort 4 qui agit sur un clapet 5 afin de le maintenir élastiquement appliqué contre un joint annulaire 6.

Il convient d'observer qu'en avant du joint 6, l'alésage 1a est profilé pour déterminer une chambre qui s'ouvre transversalement à l'opposé de l'alésage 1b, cette chambre renfermant un verrou mobile 8 associé à un ressort 9 qui tend à expulser latéralement ledit verrou. Le déplacement de ce dernier sous l'effet du ressort 9 est limité par une bague 7 prévue en avant du joint 6 et engagée avec jeu dans une ouverture 8a pratiquée dans le verrou 8, laquelle ouverture 8a présente une dent 8b.

Afin de simplifier les explications concernant le profil de l'ouverture 8a et de la dent 8b du verrou 8, on pourra se reporter à la description détaillée donnée dans le brevet français No 74 25774/2 278 031 déposé le 12 Juillet 1974 au nom de la Demanderesse.

Le raccord double comprend également une pièce mâle 10 (fig. 1, 2 et 4) qui est percée de deux trous parallèles à l'intérieur de chacun desquels est engagé un embout 11, retenu axialement en place à l'aide d'une vis 12 qui se visse dans un taraudage de la pièce 10, de manière à intersecter une gorge 11a de l'embout correspondant. Chaque embout 11 comprend un prolongement cylindrique 11b pourvu d'un bossage annulaire 11c destiné à coopérer avec la dent 8b du verrou 8. A l'opposé de ce prolongement 11b, chaque embout 11 comporte une queue axiale 11d propre à s'emmancher dans une canalisation flexible telle que 13.

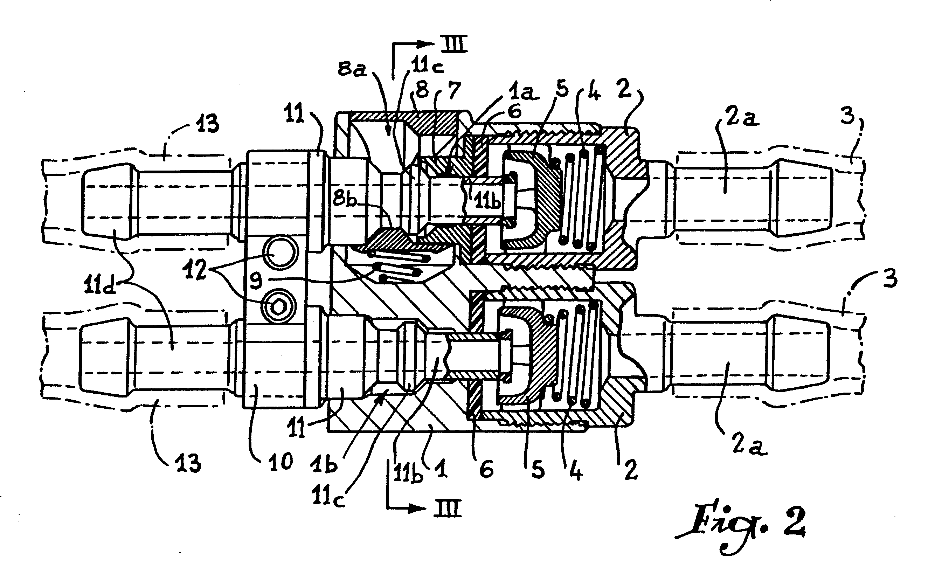

On comprend que lorsque les pièces 1 et 10 du raccord double sont rapprochées l'une de l'autre en vue de leur emmanchement, les prolongements 11b des embouts 11 s'engagent dans les alésages 1a et 1b, et repoussent les clapets 5 jusqu'à les amener en position ouverte (fig. 2), ce qui a pour effet de mettre en communication deux à deux les canalisations 3 et 13.

Lors de l'introduction, le bossage 11c de l'embout 11 qui est engagé dans l'alésage 1a de la pièce femelle 1 prend appui contre la dent 8b provoquant l'escamotage momentané du verrou 8 à l'encontre du ressort 9. Dès que ce bossage 11c a dépassé axialement la dent 8b, le verrou 8 revient à sa position normale en assurant la retenue des deux pièces 1 et 10 à la position assemblée de raccordement étanche.

On conçoit que la dissociation des deux pièces du raccord double suivant l'invention implique simplement la manoeuvre du verropu 8 à l'abaissement et le retrait axial desdites pièces. Les opérations de connexion et de déconnexion font uniquement intervenir le verrou 8, ce qui simplifie l'utilisation du raccord qui présente au surplus un encombrement réduit par rapport aux deux raccords élémentaires habituellement employés pour la jonction de canalisations jumelées.

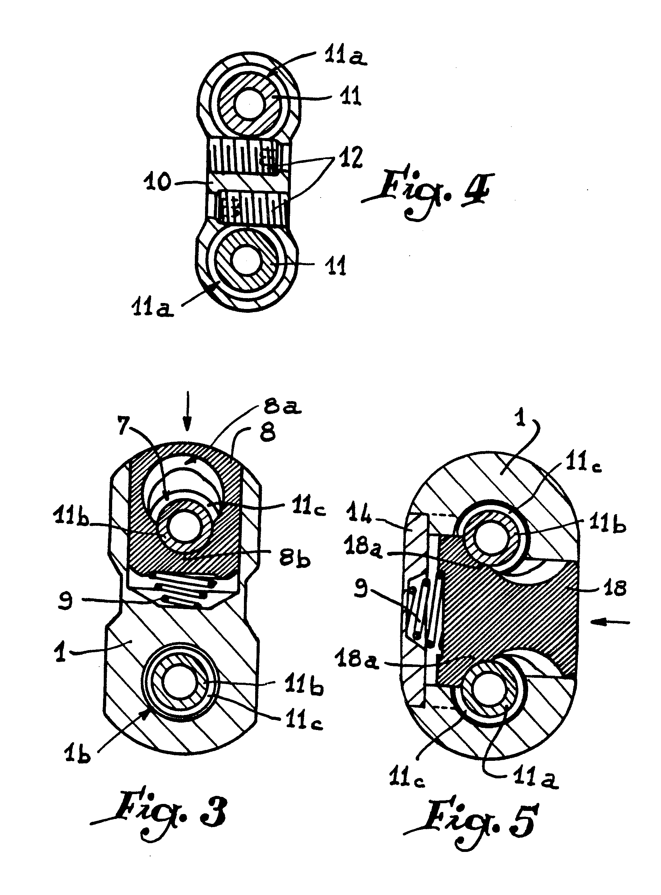

Fig. 5 illustre une variante de réalisation dans laquelle le verrou, ici référencé 18, est disposé entre les deux alésages 1a et 1b de la pièce femelle 1 et est conformé de façon à présenter deux dents latérales opposées 18a à profil en forme de demi-cercle, afin d'assurer la retenue simultanée des deux prolongements 11b. Le ressort 9 associé au verrou double 18 prend appui contre une platine 14 convenablement rapportée dans l'ouverture tranversale de la pièce 1.

On pourrait au surplus imaginer d'autres formes de réalisation d'une pièce femelle percée de deux alésages parallèles et équipée d'un verrou à commande unique, apte à opérer la retenue des pièces 1 et 10 à la position emmanchée.

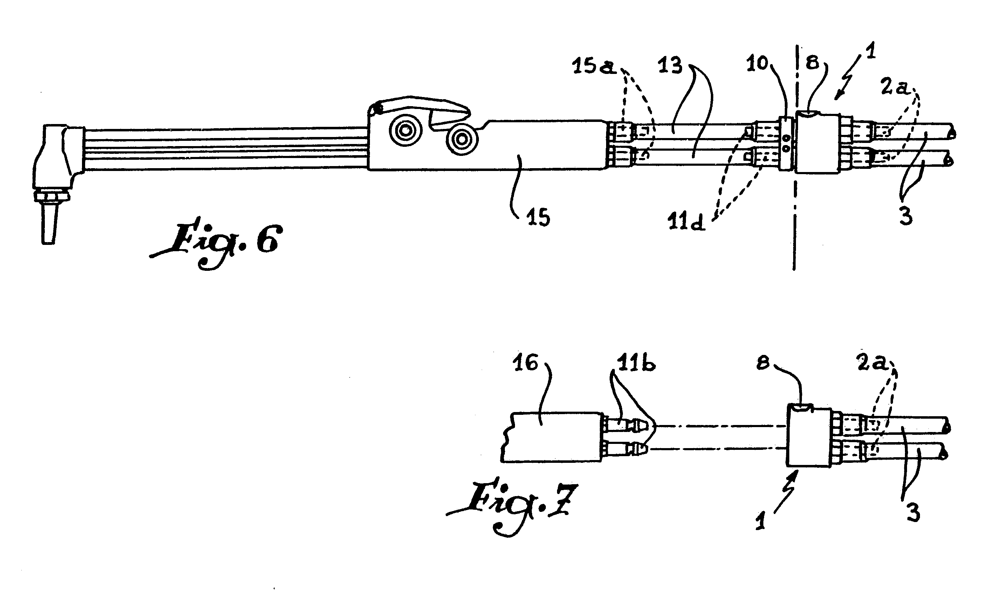

Fig. 6 illustre l'application du raccord double suivant l'invention à l'alimentation d'un chalumeau de soudage 15 de type classique, dont la partie arrière formant manche ou poignée est pourvue de deux embouts usuels 15a ; c'est sur ces embouts 15a que viennent s'emmancher et se fixer les extrémités libres des canalisations flexibles 13 solidaires des queues axiales 11d du raccord décrit en référence à fig. 1 à 4.

Mais on peut aller plus loin et considérer la partie arrière du chalumeau (référencé 16 en fig. 7) comme la pièce mâle 10 elle-même du raccord double, et faire comporter à ladite partie arrière les deux embouts 11 de manière à directement disposer des deux prolongements 11b destinés à coopérer avec la pièce femelle 1 du raccord double. On évite de la sorte les canalisations intermédiaires 13, ce qui améliore dans une mesure sensible la maniabilité du chalumeau.

On conçoit par ailleurs que les deux embouts 11 et/ou leurs prolongements 11b peuvent présenter des conformations différentes afin de réaliser un détrompeur apte à éviter toute erreur de branchement. En certains cas, les clapets chargés 5 peuvent être logés à l'intérieur de la pièce mâle 10 moyennant une conformation appropriée des embouts 11.

## Revendications

1. Raccord double pour la jonction amovible de canalisations jumelées, caractérisé en ce qu'il comprend d'une part une pièce mâle (10) pourvue de deux embouts (11) orientés parallèlement l'un à l'autre, et d'autre part une pièce femelle (1) qui est creusée de deux alésages (1a, 1b) correspondants aptes à recevoir de manière étanche les embouts précités et qui porte un mécanisme de verrou unique (8-9, 18-9) propre à assurer l'assemblage démontable des deux pièces précitées.

2. Raccord suivant la revendication 1, caractérisé en ce que le mécanisme de verrou (8-9) n'intéresse que l'un seul des deux embouts (11) de la pièce mâle (10).

3. Raccord suivant la revendication 1, caractérisé en ce que le mécanisme de verrou (18-9) est disposé entre les deux alésages (1a, 1b) de la pièce femelle (1) afin d'intéresser simultanément les deux embouts (11).

Fig. 1

Fig. 2

0259236

Fig. 4

Fig. 3

Fig. 5

Fig. 6

Fig. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 116 476  (PORTER)<br>* Figures *<br>--- | 1,3 | F 16 L  37/00 |
| X | FR-A-2 400 158  (BUNKER RAMO CORP.)<br>* Page 6, ligne 23 - page 8, ligne 14; figures *<br>--- | 1,2 | |
| X | DE-A-1 801 559  (WALTHER)<br>* Page 3, ligne 28 - page 4, ligne 7; figure 1 *<br>----- | 1,2 | |

**DOMAINES TECHNIQUES RECHERCHES (Int. Cl.4)**

F 16 L

Le présent rapport a été établi pour toutes les revendications

| Lieu de la recherche | Date d'achèvement de la recherche | Examinateur |
|---|---|---|
| LA HAYE | 23-11-1987 | HUBEAU M.G. |